# EUROPÄISCHE PATENTANMELDUNG

(11) **EP 0 838 144 A1**
(43) Veröffentlichungstag der Anmeldung: **29.04.1998**
(21) Anmeldenummer: 97114516.4
(22) Anmeldetag: 22.08.1997
(51) Int. Cl.: A01D 34/73

(54) **Gerät zum Schneiden von Pflanzen**

(30) Priorität: 28.10.1996 DE 19644739
(71) Anmelder: ROBERT BOSCH GMBH, 70442 Stuttgart (DE)
(72) Erfinder: Schneider, Helmut, 70771 Leinfelden-Echterdingen (DE); Hoelderlin, Andreas, Dr., 74354 Besigheim (DE); Ruess, Albert, 70794 Filderstadt (DE)

(57) **Zusammenfassung**

Ein Gerät zum Schneiden von Pflanzen mit mindestens einem um eine Drehachse (12) kreisenden, radial von dieser abstehenden Schneidfaden (36, 38), der auf eine Spule (13) aufgewickelt ist, die in einem drehend antreibbaren Topf (10) drehmitnehmend angeordnet ist, wobei ein drehfest und radial zur Drehachse (12) verschiebbar im Topf (10) geführter Schieber (16) die Spule (13) gegenüber dem Topf (10) mittels eines Nockens (26) drehfest arretiert bzw. freigibt, so daß durch Drehung der Spule (13) gegenüber dem Topf (10) die Länge des freien Endes (37, 39) des Schneidfadens (36, 38) nachstellbar ist, wobei der Schieber (16) sich durch Zentrifugalkraft bei Verkürzung am freien Ende (37, 39) des Schneidfadens (36, 38), beispielsweise durch Abnutzung, in seine Entriegelungsposition verstellt, wird dadurch kostengünstiger herstellbar und hinsichtlich der Einstellbarkeit des Schaltpunkts variierbar, daß der Schieber (16) eine verstellbare Ausgleichsmasse, insbesondere in Gestalt mindestens einer Ausgleichsschraube (6), trägt, so daß durch Verstellen der Ausgleichsmasse der Zeitpunkt der Fadennachstellung verändert wird.

## Beschreibung

### Stand der Technik

Die Erfindung bezieht sich auf ein Gerät zum Schneiden von Pflanzen nach der Gattung des Anspruchs 1.

Es ist ein Gerät zum Schneiden von Pflanzen gemäß EP 351 989 bekannt, bei dem ein Nachstellen der Fadenlänge des Schneidfadens durch einen fliehkraftverstellbaren Schieber mit Nocken nach dem Stoppen und beim erneuten Starten des Motors gesteuert wird. Beim Stoppen des Gerätes bzw. des Motors wird der Nocken des Schiebers durch Federmittel in die entriegelnde, ursprüngliche Position zurückgestellt. Beim erneuten Starten kann sich deshalb die Spule innerhalb des drehmitnehmenden Topfes relativ zu diesem soweit verdrehen, daß ein spulenseitiger Anschlag zur Anlage an den Nocken kommt und dadurch das Verdrehen beendet.

Das bekannte Gerät arbeitet zuverlässig, besteht aber aus verhältnismäßig vielen Einzelteilen und erfordert das Aus- und Wieder-Einschalten des Geräts zur Schneidfadennachstellung. Ein automatisches Fadennachstellen während des Gerätebetriebs ist nicht möglich.

Ein entsprechendes Gerät zum Schneiden von Pflanzen ist auch gemäß DE-OS 44 11 002 bekannt, bei dem auf Federn zur Fadennachstellung verzichtet wird. Statt dessen wird die Regelung durch den Winkelverlauf der Abstützflächen zwischen der Fadenspule und der riegelartigen Spulenarretierung bestimmt. Der Winkelverlauf errechnet sich abhängig von der Fadenmasse bzw. der Fadenfliehkraft und erfordert eine hohe Fertigungsgenauigkeit, durch die das Gerät verhältnismäßig teuer ist.

### Vorteile der Erfindung

Das erfindungsgemäße Gerät zum Schneiden von Pflanzen mit dem kennzeichnenden Merkmal des Anspruchs 1 hat den Vorteil, daß die Fadennachstellmittel mit größeren Herstellungstoleranzen fertigbar sind, so daß dadurch die Herstellungskosten geringer sind. Dabei ist der Schaltpunkt, bei dem die Nachstellung des Fadens ausgelöst wird, innerhalb bestimmter Grenzen variierbar und vom Anwender selbst individuell einstellbar, wobei die als Schraube ausgestaltete Zusatzmasse mittels Schraubendreher oder dergl. Werkzeug durch Montageöffnungen des Topfes hindurch ohne weiteres von außen verstellbar ist, so daß damit auch mögliche Änderungen des Regelverhaltens infolge Abnutzungen des Regelmechanismus ausgeglichen werden können.

Eine vorteilhafte Ausführungsform der Erfindung ergibt sich auch dadurch, daß die Zusatzmasse am Schieber einklipsbar befestigbar ist.

Infolge des einfachen Aufbaus sind der Pflege- und der Wartungsaufwand für das Gerät gering, wobei die automatische Fadennachstellung des Geräts auch bei hoher Staub-, Feuchtigkeits- und Wärmeeinwirkung sowie auch bei starken Drehzahlschwankungen zuverlässig und deutlich weniger störanfällig arbeitet als federbestückte Fadennachstellungen, weil diese allein vom Kräftegleichgewicht zwischen der Fliehkraft des Schneidfadens und der Fliehkraft des beweglichen Schiebers/Riegels abhängt.

Das Regelverhalten der erfindungsgemäßen Fadennachstellung ist besonders stabil gegen Schwankungen der Motor-Drehzahl und Schwingungen des Gerätemotors bzw. des Gerätes selbst. Dies liegt daran, daß zwischen einem am Topf drehfest, verschieblich gelagerten Schieber und der Schneidfadenspule besonders gestaltete Schrägabstützmittel angeordnet sind, wobei der Schieber eine verstellbar Zusatzmasse trägt.

Zwischen der Exzenterkraft des Schiebers und der Fliehkraft der Schneidfäden, die ein Drehmoment an der Spule erzeugen, wird Käftegleichgewicht hergestellt. Wird der Schneidfaden zu kurz, verringert sich die Schneidfaden-Fliehkraft, so daß die Exzenterkraft überwiegt und den Schieber in die Entriegelungsstellung verschiebt. In dieser Stellung reicht die verringerte Schneidfadenfliehkraft aus, die Spule gegenüber dem Schieber zu verdrehen und den Schneidfaden nach außen zu ziehen, wobei sich dieser verlängert und wobei sich dessen Fliehkraft ständig erhöht. Zum Begrenzen der Schneidfadenlänge wird die Drehung der Spule nach einem bestimmten Verdrehweg gestoppt. Dazu wird der Schieber mittels der erhöhten Schneidfadenfliehkraft in seine Verriegelungsstellung verstellt.

Das Kräftegleichgewicht zwischen Schieber und Spule in der Verriegelungsstellung wird durch die Schrägabstützung gehalten, die durch die konkave Kontur einer Anschlagfläche der Spule gegenüber dem Nocken des Schiebers verwirklicht wird. Außerdem wird zwischen einem Leitkörper und dem Nocken der Schiebers durch die Form der Leitflächenkontur des Leitkörpers ein solches Kräftegleichgewicht erzeugt, daß die Gleitreibung konstant bleibt, ohne in Haftreibung überzugehen.

### Zeichnung

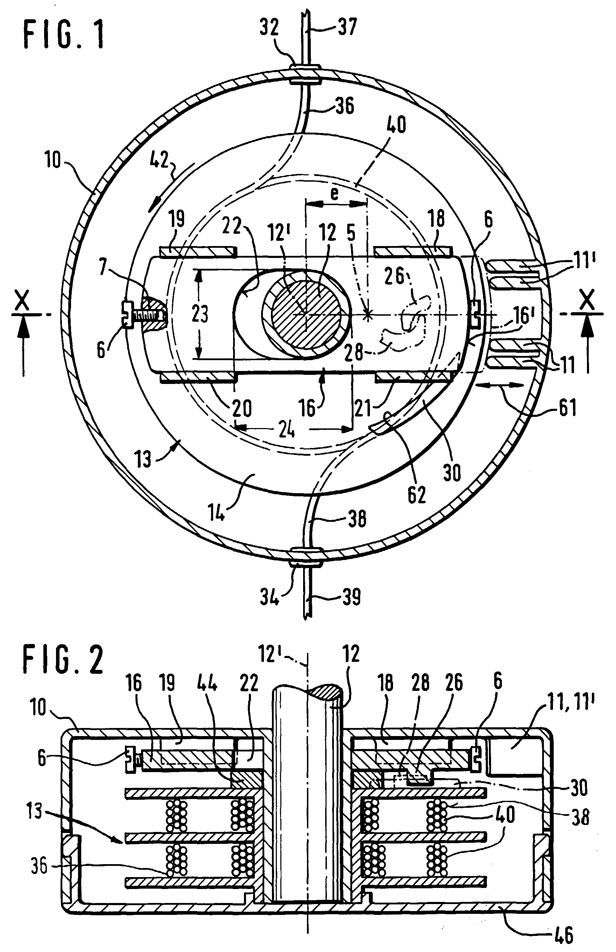

Ein Ausführungsbeispiel der Erfindung ist in der nachfolgenden Beschreibung anhand der Zeichnung näher erläutert.
Es zeigen Figur 1 eine Schnittdarstellung der Draufsicht des Topfes mit der Spule und dem Schieber,
Figur 2 eine Seitenansicht der Figur 1,
Figur 3 eine Draufsicht auf den Schieber gemäß Figur 1 und
Figur 4 eine Draufsicht auf die Spule,
Figur 5 ausschnittsweise eine als Imbusschraube ausgestaltete Ausgleichsschraube am Schieber,
Figur 6 ein über Ringnuten verstellbar rastend in der Wandung des Schiebers befestigbares Ausgleichsgewicht und
Figur 7 ein weiters Ausfürhungsbeispiel eines erfindungsgemäßen Schiebers mit einklipsbarer Zusazmasse.

### Beschreibung des Ausführungsbeispiels

Die in Figur 1 gezeigte Draufsicht eines Topfes 10 am unteren Ende eines nicht dargestellten Geräts zum Schneiden von Pflanzen, der drehfest mit einer Antriebswelle 12 verbunden ist, zeigt die zentrisch darin angeordnete Spule 13 mit Blick auf deren obere, maschinenzugewandte Stirnseite 14 und auf einen topfseitig gelagerten Schieber 16.

Der Schieber 16 ist zwischen vier Schiebeführungen 18, 19, 20, 21 auf einander gegenüberliegenden Seiten geführt und ist in seiner radialen Auslenkung durch zwei elastische Anschlagpaare 11, 11' begrenzt, die ein Verklemmen des Schiebers 16 in seiner Anschlagposition verhindern. Die Anschlagposition des Schiebers 16 ist durch eine vor der fett gezeichneten Stirnseite 16' gestrichelte parallele Linie deutlich gemacht. Der Schieber 16 trägt ein zentrales Langloch 22 mit einem kleineren Durchmesser 23 und einem größeren Durchmesser 24. Auf seiner in Darstellungsrichtung rechten Seite trägt der Schieber 16 auf der der Spule 13 zugewandten Seite einen v-förmigen Nocken 26. Zwischen dem Nocken 26 und dem rechten Rand des Langlochs 22 befindet sich der Massenmittelpunkt 5 des Schiebers 16, der damit exzentrisch zum Spulenmittelpunkt 12' positioniert ist. Der Schieber 16 trägt an beiden Enden in je einer radialen Gewindebohrung 7 je eine radial verstellbare Ausgleichsschraube 6.

Der Nocken 26 stützt sich seitlich gegen einen Anschlag 28, der, ebenso wie ein länglicher Leitkörper 30, axial in Richtung des Betrachters hervorstehend auf der Stirnseite 14 angeordnet ist.

Am Umfang des Topfes 10 treten auf entgegengesetzten Seiten durch jeweils eine Öse 32, 34 ein erster und ein zweiter Schneidfaden 36, 38 mit ihren freien Enden 37, 39 radial nach außen. Infolge der Fliehkraft bei rotierender Spule 13 beim Betrieb des Gerätes wirken die Kanten der freien Enden 37, 39 als Schneiden. Sie unterliegen dabei ständiger Abnutzung durch Abplatzen von Fadenstücken. Dadurch werden die freien Enden 37, 39 verkürzt.

Die Spule 13 ist gegenüber dem Topf 10 um die Spulenmitte 12' drehbar gelagert. Bei Anliegen des Nockens 26 am Anschlag 28 der Spule 13 ist die Verriegelungsstellung hergestellt, in der die Spule 13 am Drehen gegenüber dem Topf 10 gehindert wird. Durch radiales Verschieben des Nockens 26 gegenüber dem Anschlag 28 ist die Entriegelungsstellung erreicht, wenn der Anschlag 28 freigegeben ist. Damit kann sich die Spule 13 gegenüber dem Topf 10 verdrehen. Die Verund Entriegelungsstellung des Nockens 26 wird durch selbsttätiges Verstellen des Schiebers 16 entlang den Schiebeführungen 18, 19, 20, 21, gemäß dem Doppelpfeil 61 hergestellt.

Die Spule 13 trägt zwei Fadenwicklungen 40, die durch zwei gestrichelt, konzentrisch um den Mittelpunkt der Antriebswelle 12 gezeichnete Kreise dargestellt sind. In die Fadenwicklung 40 gehen die freien Enden 37, 39 der Schneidfäden 36, 38 bogenförmig über.

Ein Pfeil 42 zeigt die Drehrichtung der Spule 13 gegenüber dem Topf 10 zum Nachstellen der Fadenlänge.

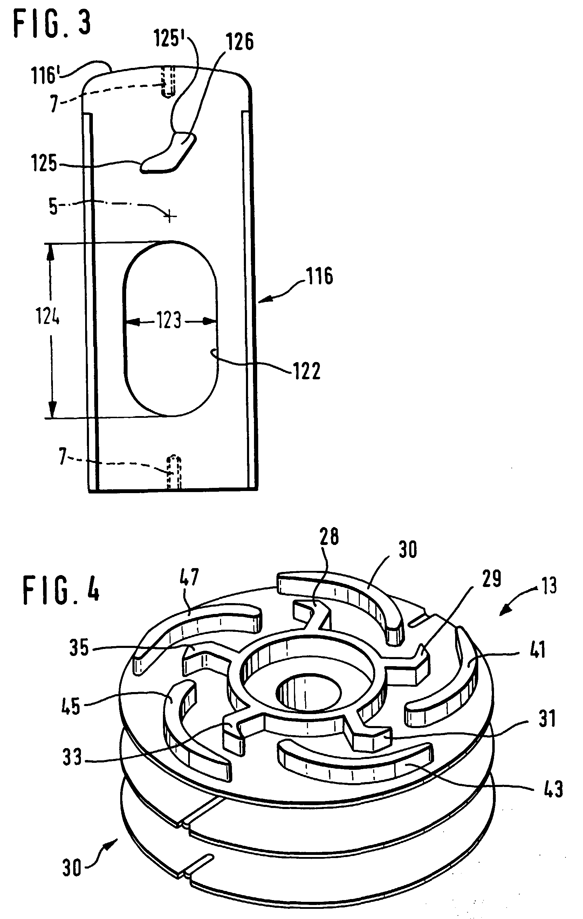

Die in Figur 2 gezeigte seitliche Schnittdarstellung der Figur 1 entsprechend den Pfeilen X-X verdeutlicht die Lage der Antriebswelle 12 gegenüber dem Topf 10, und die Position der als Doppelspule ausgestalteten Spule 13 mit den Schneidfäden 36, 38 und die Lage des Schiebers 16 mit dem Nocken 26 und den Ausgleichsschrauben 6. Außerdem sind die Anordnung des Schiebers 16 zwischen den durch stirnseitige Vorsprünge des Topfes 10 gebildeten Schiebeführungen 18, 19, 20, 21 sowie der Leitkörper 30, ein Distanzring 44 sowie ein den Topf 10 verschließender Deckel 46 deutlich erkennbar.

Der Distanzring 44 sichert einen axialen Abstand zwischen der Spule 13 und dem Schieber 16, damit deren einander zugewandten axialen Stirnseiten sich nicht berühren, um nicht die freie Verschiebbarkeit und damit die Funktion des Schiebers 16 zu behindern.

Der Hub des Schiebers 16 wird begrenzt durch die Differenz des größeren Durchmessers 24 des Langlochs 22 gegenüber dem Durchmesser der Antriebswelle 12 und durch die elastischen Anschläge 11, 11', an denen die Stirnseite des Schiebers 16 bei dessen maximaler Auslenkung zur Anlage kommt. Die in Betrachtungsrichtung linke bzw. links vom Massenmittelpunkt 5 befindliche Seite des Schiebers 16 entsprechend Figur 1 ist leichter als die in Betrachtungsrichtung rechte Seite mit dem Nocken 26. Durch geringfügiges Ändern der radialen Ein- oder Ausschraubposition der Ausgleichsschrauben 6 ändert sich die Position des Massenmittelpunkts 5 des Schiebers 16 und damit die Regelcharakteristik der automatischen Fadennachstellung: Die Fliehkraft des beweglichen Schiebers 16 ist eine Funktion der Masse des Schiebers 16 und seiner Exzentrizität e bezogen auf die Spulenmitte 12'. Die Exzentrizität e ist der senkrecht Abstand des Massenmittelpunkts 5 zur Achse 12'.

Wird der Massenmittelpunkt 5 durch Herausdrehen der rechten Schraube 6 und/oder Hereindrehen der linken Schraube näher zur Drehachse 12' verschoben, wird die Exzentrizität e und damit die Fliehkraft geringer und damit der Schaltpunkt weiter nach innen verlegt, d.h. die Differenz zwischen Fadenfliehkraft und Schieberfliehkraft wird kleiner und die Fadennachstellungsregelung spricht erst bei höherem Fadenverschleiß an als zuvor.

Die Einstellvorrichtung kann so ausgeführt sein, daß der Anwender den Schaltpunkt ohne Demontage des Trimmers durch besondere, nicht dargestellte Montageöffnungen in der Wand des Topfes 10 hindurch, insbesondere ohne Werkzeug oder Hilfsvorrichtung, verstellen kann.

Der Topf 10 ist gemeinsam mit der Spule 13 als Ersatzteil leicht von der Abtriebswelle 12 des Trimmmers entnehmbar, so daß anschließend durch Einfuhren einer Schraubendreherklinge durch radiale den Ausgleichsschrauben 6 gegenüberliegende Öffnungen hindurch die Ausgleichsschrauben 6 mehr oder weniger weit in den Schieber 16 hinein bzw. aus diesem herausgeschraubt werden können, bis die Auslösung der Fadennachstellung wie gewünscht funktioniert.

Dadurch, daß zwei Ausgleichsmassen vorhanden sind, ist sowohl eine Feinverstellung als auch eine Grobverstellung des Massenmittelpunkts möglich. Werden beide Ausgleichsschrauben 6 in die gleiche Richtung radial verstellt, ändert sich die Lage des Massenmittelpunkts stark und werden die Ausgleichsschrauben von beiden Seiten aus in entgegengesetzten Richtungen radial verstellt, ändert sich Lage des Massenmittelpunkts nur gering.

Der Massenunterschied zwischen den beiden Seiten ist so berechnet, daß bei einer bestimmten Drehzahl des Topfes 10, insbesondere bei einer bestimmten minimalen Schneidfadenlänge, die den Schieber 16 radial bewegende Kraft größer ist als die radiale Gegenkraftkomponente zwischen der Anlagefläche 25 des Nockens 26 und der Anschlagfläche 50 des Anschlags 28 bzw. entsprechend den anderen Anschlägen 29, 31, 33, 35.

Die Figur 3 zeigt eine Ansicht der der Spule 13 zugewandten Seite des Schiebers 116 gemäß Figur 1 mit dem Nocken 126 und verdeutlicht die Lage der Gleitflächen 125, 125' gegeüber dem Langloch 122 mit dem größeren 124 und kleineren Durchmesser 123 sowie mit den Gewindebohrungen 7 zur Aufnahme von Ausgleichsschrauben.

Die Figur 4 zeigt eine vollständige, räumliche Darstellung der Spule 13 gemäß Figur 1 mit den Anschlägen 28, 29, 31, 33, 35, sowie den Leitkörpern 30, 41, 43, 45, 47.

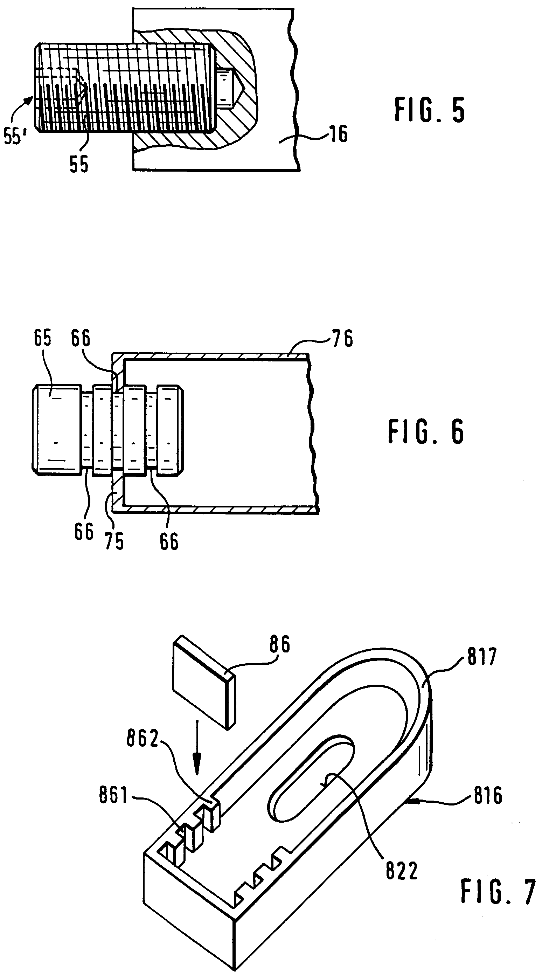

Figur 5 zeigt ausschnittsweise die Anordnung einer als Imbusschraube 55 mit Innensechskant 55' ausgestalteten Ausgleichsschraube am Schieber 16, die auf die gleiche Weise funktioniert wie die in Figur 1 und 2 dargestellten Ausgleichsschrauben 6, nur daß anstelle eines Schlitzschraubenziehers ein Innensechskantschlüssel verwendbar ist.

Die Figur 6 zeigt ein mit drei Ringnuten 66 versehenes Ausgleichsgewicht 65, das rastbar in einer Ausnehmung der Wandung 75 des Schiebers 76 verstellbar befestigbar ist. Hier muß zur Verstellung des Ausgleichsgewichts 65 der Schieber 76 aus dem Topf 10 entnommen werden, so daß anschließend das Umpositionieren des Ausgleichsgewichts 65 von einer Ringnut 66 in eine andere leicht zu bewerkstelligen bzw. zu wiederholen ist, bis die gewünschte Charakteristik der Fadennachstellung erreicht ist.

Die Figur 7 zeigt einen Schieber 816, in den ein Ausgleichsgewicht 86 in Form eines Plättchens schubfachartig wahlweise zwischen beidseitig auf gegenüberliegenden Seiten in der Außenwand 817 angeordneten beabstandeten Nuten 861 und Vorsprüngen 862 einrastbar ist.

Zur Verstellung des Ausgleichsgewichts 86 muß der Schieber 816 aus dem Topf entnommen werden, so daß anschließend das Umpositionieren des Ausgleichsgewichts 86 von einer Nut 861 in eine andere leicht erfolgen kann und so oft zu wiederholen ist, bis sich die gewünschte Charakteristik der Fadennachstellung erreicht ist.

## Patentansprüche

1. Gerät zum Schneiden von Pflanzen mit mindestens einem um eine Drehachse (12) kreisenden, radial von dieser abstehenden Schneidfaden (36, 38), der auf eine Spule (13) aufgewickelt ist, die in einem drehend antreibbaren Topf (10) drehmitnehmend angeordnet ist, wobei der Topf (10) an seinem Umfang mindestens eine Öffnung aufweist, durch die ein freies Ende (37, 39) des Schneidfadens (36, 38) nach außen tritt, wobei ein drehfest und radial zur Drehachse (12) verschiebbar im Topf (10) geführter Schieber (16) die Spule (13) gegenüber dem Topf (10) mittels eines Nockens (26) drehfest arretiert bzw. freigibt, so daß durch Drehung der Spule (13) gegenüber dem Topf (10) die Länge des freien Endes (37, 39) des Schneidfadens (36, 38) nachstellbar ist, wobei sich der Schieber (16) durch Zentrifugalkraft bei Verkürzung am freien Ende (37, 39) des Schneidfadens (36, 38), beispielsweise durch Abnutzung, bei einem bestimmten Schaltpunkt aus seiner Verriegelungsposition in seine Entriegelungsposition verstellt, dadurch gekennzeichnet,
daß der Schieber (16) mindestens eine verstellbare Ausgleichsmasse (6) trägt, deren Stellposition den Schaltpunkt zur Fadennachstellung bestimmt.

2. Gerät nach Anspruch 1, dadurch gekennzeichnet, daß die Ausgleichsmasse durch eine am Schieber (16) radial verstellbare Ausgleichschraube (6, 55) gebildet wird.

3. Gerät nach Anspruch 2, dadurch gekennzeichnet, daß die Ausgleichschraube (6, 55) in eine am Schieber (16) radiale Gewindebohrung (7) schraubbar angeordnet ist.

4. Gerät nach Anspruch 1, dadurch gekennzeichnet, daß die Ausgleichsmasse als gegenüber dem Schieber (76, 816) in unterschiedlichen radialen Positionen verrastbarer Bolzen (65) oder Platte (86) ausgestaltet ist.

5. Gerät nach Anspruch 4, dadurch gekennzeichnet, daß der Bolzen (65) mehrere Ringuten (66) trägt, von denen jede in eine passende Ausnehmung des Schieber (76) einklipsbar ist.

6. Gerät nach Anspruch 1, dadurch gekennzeichnet, daß der Topf (10) eine Öffnung zum Durchgriff eines Einstellwerkzeugs zum Einstellen der Ausgleichsmasse (6, 55) aufweist.

7. Topf (10) für ein Gerät nach dem Oberbegriff des Anspruches 1, dadurch gekennzeichnet, daß der Schieber (16) mindestens eine radial verstellbare Ausgleichsmasse (6) trägt, durch deren Verstellen der Schaltpunkt der Fadennachstellung veränderbar ist.

8. Topf nach Anspruch 7, dadurch gekennzeichnet, daß die Ausgleichsmasse, insbesondere die Ausgleichsschrauben (6, 55), von außen durch Öffnungen des Topfes (10) hindurch ohne Demontage des Geräts verstellbar sind.
